# EUROPEAN PATENT SPECIFICATION

(11) **EP 2 500 994 B1**
(45) Date of publication and mention of the grant of the patent: **07.09.2016**
(21) Application number: 12157488.3
(22) Date of filing: 29.02.2012
(51) Int. Cl.: H01R 12/59, H01R 24/28, H01R 4/02, H01R 43/02, H01R 35/02

(54) **Rotary connector**
Rotationssteckverbinder
Connecteur rotatif

(30) Priority: 14.03.2011 JP 2011055335
(43) Date of publication of application: 19.09.2012
(73) Proprietor: Alps Electric Co., Ltd., Tokyo 145-8501 (JP)
(72) Inventor: Takahashi, Seishi, Tokyo 145-8501 (JP); Sato, Hiroyuki, Tokyo 145-8501 (JP); Osumi, Yasuhisa, Tokyo 145-8501 (JP)
(74) Representative: Klunker . Schmitt-Nilson . Hirsch

(56) References cited:
- EP-A2- 1 378 964
- GB-A- 2 346 743
- JP-A- 11 097 088
- US-A- 4 464 007
- US-A- 5 286 218

## Description

### BACKGROUND OF THE INVENTION

### 1. Field of the Invention

The present invention relates to a rotary connector according to the preamble of claim 1.

### 2. Description of the Related Art

In a rotary connector that is used as the electrical connection means of an air bag system assembled into the steering device of an automobile and the like, an annular space is formed between a movable-side housing and a stationary-side housing connected so as to be rotatable relative to each other and a flat cable is received in the annular space while being wound. Connecting members (lead blocks), which are electrically connected to the outside, are connected to both end portions of the flat cable, respectively. The lead block, which is connected to one end portion of the flat cable, is mounted on a movable-side housing of the rotary connector, which is rotated integrally with a steering wheel, and is connected to an external connector that is led from an air bag system, a horn circuit, and the like provided on the steering wheel. Further, the lead block, which is connected to the other end portion of the flat cable, is mounted on a stationary-side housing of the rotary connector, and is connected to an external connector that is led from an electrical device provided on a vehicle main body.

In the rotary connector according to the preamble of claim 1, (JP-11 097088-A), the connecting members are formed by covering a plurality of parallel conductors except for holes for welding with an insulating material. Accordingly, the plurality of parallel conductors are exposed to the outside at both end portions of the flat cable. Further, the connecting members are superimposed on one surface of the flat cable so that conductors of the flat cable cross the conductors of the connecting members. Then, the conductors of the connecting members, which are exposed to welding-connection holes, are connected to the conductors of the flat cable by welding (for example, see Japanese Unexamined Patent Application Publication No. 11-97088).

Meanwhile, since the lead block used for the rotary connector in the related art is formed by covering the conductors except for except for holes for welding with an insulating material, the lead block need to be manufactured by insert molding. Accordingly, since the shape of a mold used to manufacture the connecting member becomes complicated, the manufacturing costs of the lead block are increased. For this reason, there is a problem in that it is difficult to reduce the costs of the rotary connector.

### SUMMARY OF THE INVENTION

The invention provides a rotary connector of which costs can be reduced.

According to a first aspect of the invention, there is provided a rotary connector including the features of claim 1.

According to this structure, since the lead block does not need to be formed using a complicated mold by insert molding and it is possible to form the lead block simply by fitting the plurality of pin terminals to the insulating support member and holding the plurality of pin terminals, it is possible to significantly reduce the costs of the lead block. Accordingly, it is possible to provide a rotary connector of which costs can be reduced.

Further, in the rotary connector, the plurality of pin terminals may include locking portions that are locked to an outer wall of the support member while being fitted to the support member and held; at least one of the movable-side housing and the stationary-side housing may include a receiving portion in which the lead block is received, and may include a holding wall portion including insertion holes to which the leading end portions of the plurality of pin terminals are inserted; and the locking portions may be interposed between the holding wall portion and the support member while the lead block is received. According to this structure, when an external connector is attached to and detached from the respective pin terminals, it is possible to receive an external force (a pushing force or a pulling force), which is applied to the respective pin terminals, by the support member, the holding wall portion, the inner surface of the receiving portion, and the like through the locking portions. Accordingly, there is no concern that the respective pin terminals are separated from the support member by the external force during the attachment and detachment or the separation or the like of the welded portions between the pin terminals and the flat cable (belt-like conductors) causes conduction failure. Therefore, defects do not easily occur in the assembly work, so that it is possible to improve the reliability of the rotary connector.

Furthermore, in the rotary connector, the stationary-side housing may be formed by snap fitting a first case body to a second case body, the receiving portion may be formed at the second case body, the insertion holes may be formed at the first case body, and the first and second case bodies may form a connector holder that holds the lead block. According to this structure, it is possible to simplify the structure for mounting the lead block on the stationary-side housing, so that it is possible to easily assemble the rotary connector.

Moreover, in the rotary connector, the support member may include first holding portion which is formed close to the leading end portions of the plurality of pin terminals and where the plurality of pin terminals are fitted and held, and second holding portion that is formed close to the base end portions of the plurality of pin terminals and hold the plurality of pin terminals so that the plurality of pin terminals are arranged parallel to each other. According to this structure, the work for fitting the respective pin terminals to the support member becomes easy. Accordingly, it is possible to improve the mounting strength and the mounting-position accuracy of each of the pin terminals on the support member and to easily perform the,work for manufacturing the lead block without difficulty.

Further, in the rotary connector, the support member may include exposure hole portions that are formed so that the joint portions are disposed between the first and second holding portions, and guide grooves that guide the plurality of pin terminals so that the plurality of pin terminals are inserted while the surfaces of the pin terminals are exposed to the outside, when the plurality of pin terminals are inserted from the first holding portion toward the second holding portions; and the plurality of pin terminals may include engaging portion that are formed so as to bite into inner surfaces of the first holding portion. According to this structure, it is possible to improve the mounting strength of each of the pin terminals on the support member. Accordingly, it is possible to more easily perform the work for manufacturing the lead block without difficulty.

Furthermore, in the rotary connector, the connecting portions of the flat cable, which are connected to the joint portions of the plurality of pin terminals, are exposed to a plurality of hole portions that are formed at the pair of insulating films. According to this structure, the strength of the end portion of the flat cable is improved. Accordingly, the work handling the flat cable is easily performed, so that it is possible to suppress the occurrence of defects in a manufacturing process.

According to the rotary connector of the invention, it is possible to form the lead block simply by fitting the plurality of pin terminals to the support member and holding the plurality of pin terminals and to significantly reduce the costs of the lead block. Accordingly, it is possible to provide a rotary connector of which costs can be reduced.

Further, according to the invention, the plurality of pin terminals include locking portions that are locked to an outer wall of the support member while being fitted to the support member and held; at least one of the movable-side housing and the stationary-side housing may include a receiving portion in which the lead block is received, and may include a holding wall portion including insertion holes to which the leading end portions of the plurality of pin terminals are inserted; and the locking portions may be interposed between the holding wall portion and the support member while the lead block is received. Accordingly, when an external connector is attached to and detached from the respective pin terminals, it is possible to receive an external force (a pushing force or a pulling force), which is applied to the respective pin terminals, by the support member, the holding wall portion, or the inner surface of the receiving portion through the locking portions. Therefore, there is no concern that the respective pin terminals are separated from the support member by the external force during the attachment and detachment or the separation or the like of the welded portions between the pin terminals and the flat cable (belt-like conductors) causes conduction failure. As a result, it is possible to provide a rotary connector having high reliability. Meanwhile, it is preferable that a recessed portion in which the locking portions are received be formed at the holding wall portion so that the locking portions come into contact with the outer wall of the support member. According to this structure, since the surface of the holding wall portion, which faces the support member and on which the recessed portion is not formed, stably comes into contact with the outer wall of the support member, the pin terminals and the lead block can be reliably mounted on the movable-side housing or the stationary-side housing without rattling. Accordingly, this structure is highly preferable.

### BRIEF DESCRIPTION OF THE DRAWINGS

Fig. 1 is a bottom view of a rotary connector according to an embodiment of the invention;
Fig. 2 is a view showing a part of a cross-sectional structure taken along a line II-II of Fig. 1;
Fig. 3 is an enlarged view of a portion C of Fig. 2;
Fig. 4 is a cross-sectional view taken along a line IV-IV of Fig. 1;
Fig. 5 is an exploded perspective view of a lead block shown in Fig. 2; and
Fig. 6 is an exploded perspective view of the lead block and a flat cable shown in Fig. 2.

### DESCRIPTION OF THE PREFERRED EMBODIMENTS

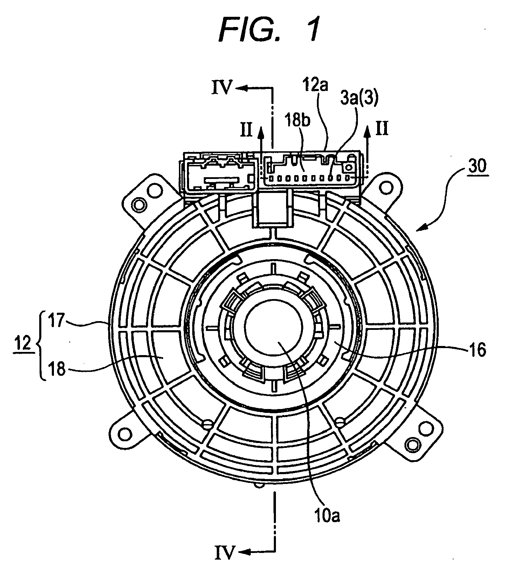

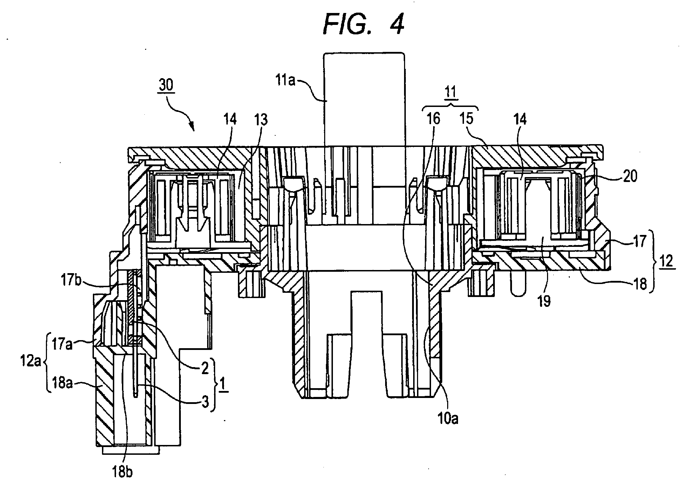

An embodiment of the invention will be described below with reference to the drawings. As shown in Figs. 1 and 4, a rotary connector 30 according to this embodiment connects a movable-side housing 11, which is rotated integrally with a steering wheel (not shown), with a stationary-side housing 12, which is provided on a steering column and the like, so that the movable-side housing 11 and the stationary-side housing 12 are rotatable relative to each other. The rotary connector 30 has a structure where a flat cable 20 is received in an annular space 13 formed between both the housings 11 and 12 while being wound. The rotary connector 30 is assembled within a steering device of an automobile and used as the electrical connection means of an air bag system or the like. Meanwhile, a steering shaft (not shown) is inserted into a center hole 10a of the rotary connector 30.

An upper rotor 15 and a lower rotor 16 are integrated with each other by snap fitting, so that the movable-side housing 11 is formed. A lead block (not shown) is assembled with an upper connector holder 11a that protrudes upward in Fig. 4. An outer cylindrical portion 17 as a second case body and a lower cover 18 as a first case body are integrated with each other by snap fitting, so that the stationary-side housing 12 is formed. A lead block 1 is assembled with a lower connector holder 12a that protrudes downward in Fig. 4. The annular space 13 is formed between both the housings 11 and 12, and the flat cable 20 is received in the annular space 13 so as to be capable of being wound and rewound. Further, a plurality of rollers 14, which guide the winding operation and the rewinding operation of the flat cable 20, and a roller holder 19, which holds the rollers 14 so as to allow the rollers 14 to be rotatable, are assembled in the annular space 13.

One end portion (outer end portion) of the flat cable 20 is connected to the lead block 1, and the lead block 1 is held by the lower connector holder 12a of the stationary-side housing 12. As shown in Fig. 4, the lower connector holder 12a is formed by the combination of a lower protruding portion 17a (second case body) of the outer cylindrical portion 17 (second case body) and a lower protruding portion 18a (first case body) of the lower cover 18 (first case body). The lead block 1 is adapted so that an external connector led from an electrical device provided on a vehicle main body is connected to the lead block 1. Further, the other end portion (inner end portion) of the flat cable 20 is connected to a lead block (not shown), and this lead block is held by the upper connector holder 11a of the movable-side housing 11. This lead block (not shown) is adapted so that an external connector led from an air bag system, a horn circuit, or the like provided on the steering wheel is connected to the lead block.

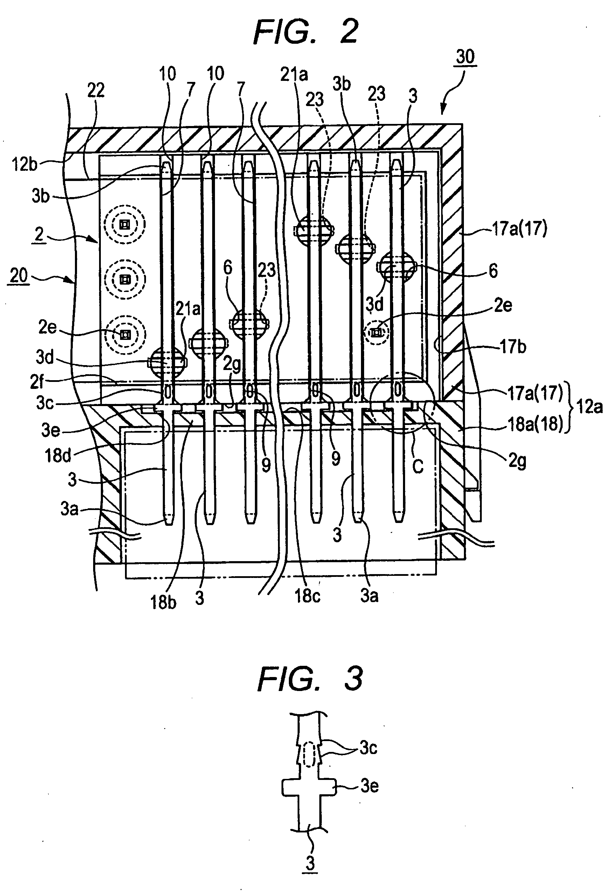

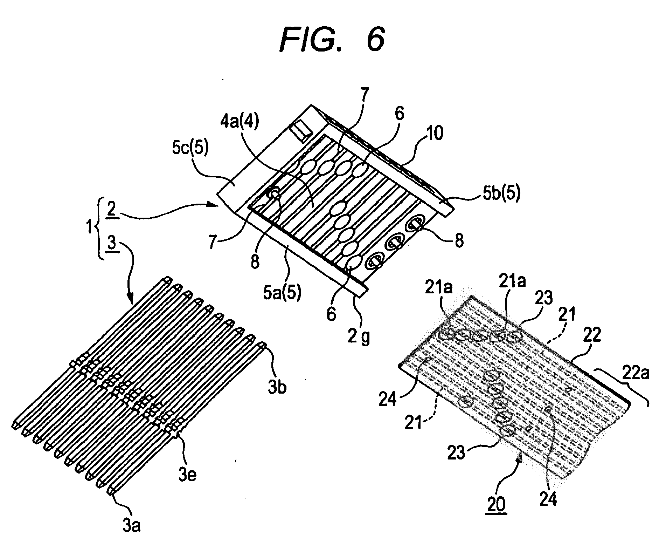

As shown in Figs. 2 and 6, the flat cable 20 is a belt-like body that is formed by covering a plurality of belt-like conductors 21, which are arranged parallel to each other, with a pair of insulating films 22. At the insulating films 22 of the end portion of the flat cable 20, conductor exposure holes 23 through which a part (connecting portions 21a) of the respective belt-like conductors 21 are exposed to the outside are formed and through holes 24 into which positioning protrusions 8 formed at the lead block 1 are inserted are formed. A long portion 22a, which forms a portion of the flat cable 20 between both end portions of the flat cable 20, is received in the annular space 13 of the rotary connector 30 (Fig. 4). As the movable-side housing 11 is rotated, a winding operation or a rewinding operation is performed. Meanwhile, Fig. 6 is an exploded perspective view when seen from the back side of the plane of Fig. 2.

As shown in Figs. 2 and 4, the lead block 1 includes a support member 2 that is formed of an insulating resin molding; and a plurality of pin terminals 3 that are arranged parallel to each other and fitted and fixed to the support member 2 so as to be held. Jetty portions 5 (5a, 5b, and 5c) are erected along three sides of a rectangular bottom plate portion 4 of the support member 2, that is, three sides of the support member 2 except for one side that is a portion through which the flat cable 20 extends outward. The flat cable 20 is disposed and superimposed on an inner surface portion 4a of the bottom plate portion 4 forming an inner area of the jetty portions 5 so that the respective belt-like conductors 21 of the flat cable 20 are orthogonal to the respective pin terminals 3 of the support member 2. Further, the connecting portions 21a of the belt-like conductors 21 are exposed to the conductor exposure hole (hole portions) 23 of the flat cable 20, and joint portions 3d of the pin terminals 3 cross above the conductor exposure holes 23. The connecting portions 21a and the joint portions 3d, which cross each other, are welded and connected to each other as described below. Meanwhile, one side of the support member 2 where the jetty portion 5 is not formed forms an open end portion 2f (see Fig. 2) that guides the long portion 22a of the flat cable 20 to the annular space 13. When the lead block 1 is assembled in the lower connector holder 12a, the open end portion 2f is adjacent to an opening 12b formed at the lower connector holder 12a of the stationary-side housing 12 (see Fig. 2).

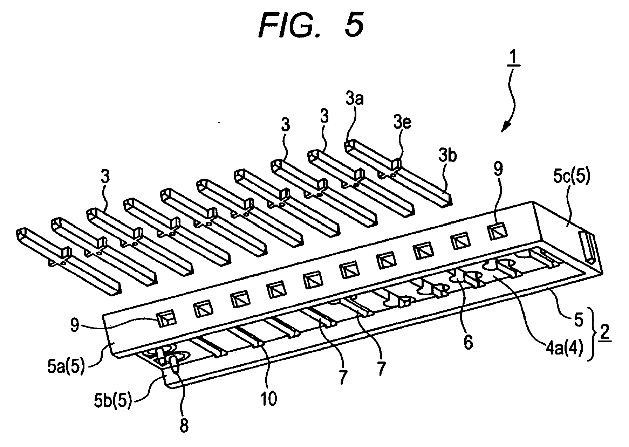

As shown in Fig. 2, a plurality of mounting hole portions 9 (first holding portions) are formed at one of two long jetty portions, which face each other, of the jetty portions 5 of the support member 2, that is, at the jetty portion 5a, which is disposed along one long side of the support member 2 positioned close to leading end portions 3a of the pin terminals 3 shown in Fig. 2, at regular intervals. When the respective pin terminals 3 are inserted and fitted into the mounting hole portions 9 from the leading end portions 3a thereof, these mounting hole portions 9 hold the respective pin terminals 3 so that the respective pin terminals 3 are fixed. Further, fitting portions 10 (second holding portions) into which base end portions 3b of the respective pin terminals 3 are fitted are formed at the jetty portion 5b, which is disposed along the other long side of the support member 2, of the jetty portions 5 at regular intervals. When the base end portions 3b of the respective pin terminals 3 are fitted into these fitting portions 10, the respective pin terminals 3 are arranged parallel to each other. Here, the mounting hole portions 9 and the fitting portions 10 are positioned so as to face each other, respectively. Furthermore, as shown in Figs. 2 and 5, a plurality of exposure hole portions 6 and a plurality of positioning protrusions 2e are formed at the bottom plate portion 4 of the support member 2. The back sides of portions of the respective pin terminals 3 crossing the conductor exposure holes 23 of the flat cable 20, that is, the back sides of the joint portions 3d are exposed to the outside through the exposure hole portions 6. The positioning protrusions 2e are inserted into the through holes 24 formed at the end portion of the flat cable 20. When the joint portions 3d of the respective pin terminals 3 are connected to the connecting portions 21a of the belt-like conductors 21 of the flat cable 20 by, for example, spot welding as described below, electrodes of a spot welder are inserted into the exposure hole portions 6. Moreover, when the positioning protrusions 2e are inserted into the through holes 24 and are caulked, the end portion of the flat cable 20 are positioned on and fixed to the bottom plate portion 4 of the support member 2. Meanwhile, guide grooves 7 are formed on an inner bottom surface 4a of the support member 2. The guide grooves 7 make the respective pin terminals 3, which are fitted from the respective mounting hole portions 9, be arranged parallel to each other, and guide the respective pin terminals 3 so that the surfaces of the respective pin terminals 3 are exposed to the outside. Accordingly, by the formation of the guide grooves 7, it is possible to smoothly fit the respective pin terminals 3 to the support member 2 so that the respective pin terminals 3 are arranged parallel to each other. Therefore, it is possible to easily assemble the lead block 1. Meanwhile, if the guide grooves 7 are formed with dimensions where the respective pin terminals 3 can be press-fitted to the guide grooves, the guide grooves 7 function as holding portions that hold the respective pin terminals 3. Accordingly, it is possible to apply the guide grooves 7 instead of the fitting portions 10.

As shown in Figs. 2 and 5, each of the pin terminals 3 includes a stopper portion 3e (locking portion) between the leading end portion 3a and the base end portion 3b. The stopper portion 3e is formed to be wider than the mounting hole portion 9. When each of the pin terminals 3 is fitted into the mounting hole portion 9 and the base end portion 3b is fitted to the fitting portion 10, the stopper portion 3e comes into contact with and is locked to the peripheral edge portion of the mounting hole portion 9, that is, an outer wall 2g of the jetty portion 5a. Accordingly, the stopper portion 3e has a function of determining the length of each of the pin terminals 3 that is fitted to the support member 2. Further, each of the pin terminals 3 includes wedge-shaped portions 3c (engaging portions) at a position corresponding to the mounting hole portion 9 in the state shown in Fig. 2, that is, near the base end portion of the stopper portion 3e (see Fig. 3). When each of the pin terminals 3 is fitted to the mounting hole portion 9 so that the stopper portion 3e comes into contact with the outer wall 2g (jetty portion 5) of the support member 2, the wedge-shaped portions 3c bite into the inner surface of the mounting hole portion 9. Accordingly, the wedge-shaped portions 3c have a function of tightly holding each of the pin terminals 3 at the support member 2 and can improve the mounting strength and mounting-position accuracy of each of the pin terminals 3 on the support member 2, so that it is possible to easily perform the work for manufacturing the lead block 1 without difficulty. Meanwhile, the stopper portion 3e may be formed in the shape of a wide flange so as to be locked to and come into contact with the peripheral edge portion of the mounting hole portion 2b, but may be formed in the shape of a protrusion. Further, since the stopper portions 3e are interposed between a holding wall portion 18b of the lower protruding portion 18a (lower cover 18) and the outer wall 2g of the support member 2 when the lead block 1 is received in a receiving recess 17b (receiving portion) of the lower connector holder 12a, the mounting strength of each of the pin terminals 3 on the rotary connector 30 is further increased. Details will be described below.

Meanwhile, a lead block (not shown), which is held by the movable-side housing 11, also has substantially the same basic structure as the basic structure of the lead block 1, and a required number of pin terminals are press-fitted and fixed to the support member.

Next, a procedure for connecting the flat cable 20 to the lead block 1 will be described. In order to connect one end portion of the flat cable 20 to the lead block 1, first, the end portion of the flat cable 20 is disposed on the inner surface portion 4a (bottom plate portion 4) of the support member 2 and the positioning protrusions 2e are inserted into the through holes 24. As a result, the end portion of the flat cable 20 is positioned relative to the support member 2 and the respective conductor exposure holes 23 are disposed directly above the respective exposure hole portions 6. The positioning protrusions 2e are thermally caulked in this state, so that the flat cable 20 is fixed while being positioned on the bottom plate portion 4 of the support member 2. After that, electrodes (not shown) of a spot welder are inserted into the exposure hole portion 6 and the conductor exposure hole 23, respectively. The joint portion 3d of the pin terminal 3 and the connecting portion 21a of the belt-like conductor 21 are made to come into press contact with each other and are joined to each other by spot welding that is performed by making current flow through the joint portion 3d and the connecting portion 21a. Meanwhile, a procedure for connecting the other end portion of the flat cable 20 to a lead block (not shown) is also the same as the above-mentioned procedure.

The lead block 1 is assembled with the lower connector holder 12a of the stationary-side housing 12 after being connected to the end portion (outer end portion) of the flat cable 20. A receiving recess 17b, in which the support member 2 can be disposed while being positioned, is formed at the lower protruding portion 17a of the lower connector holder 12a as shown in Figs. 2 and 4. Further, the holding wall portion 18b is formed at the lower protruding portion 18a of the lower cover 18. The holding wall portion 18b extends along the lower surface of the support member 2, that is, the outer wall 2g of the jetty portion 5a positioned close to the leading end portions 3a of the pin terminals 3. A recessed portion 18c and a plurality of insertion holes 18d are formed at the holding wall portion 18b. The stopper portions 3e of the respective pin terminals 3 are disposed in the recessed portion 18c. Portions of the respective pin terminals 3, which are closer to the leading end portions than the stopper portions 3e, are individually inserted into the plurality of insertion holes 18d. Due to this structure, the stopper portions 3e of the respective pin terminals 3 are interposed between the holding wall portion 18b of the lower protruding portion 18a and the outer wall 2g of the support member 2. Accordingly, even though a large external force (a pushing force or a pulling force) is applied to the pin terminals 3 when an external connector is attached to and detached from the respective pin terminals 3 protruding outward from the insertion holes 18d of the holding wall portion 18b, there is no concern that the pin terminals 3 are separated from the support member 2 and there is also no concern that the separation of the welded portions between the joint portions 3d of the pin terminals 3 and the connecting portions 21a of the belt-like conductors 21 of the flat cable 20 causes conduction failure. Accordingly, it is possible to easily perform the work for attaching/detaching an external connector to/from the rotary connector 30 without difficulty. Meanwhile, since the recessed portion 18c of the holding wall portion 18b is formed with a depth where the stopper portions 3e come into contact with the outer wall 2g of the jetty portion 5a, the surface of the holding wall portion 18b, which faces the support member 2 and on which the recessed portion 18c is not formed, stably comes into contact with the outer wall 2g of the jetty portion 5a. Since the respective pin terminals 3 and the lead block 1 can be reliably mounted on the stationary-side housing 12 without rattling in this structure, this structure is highly preferable. Here, the recessed portion 18c may be formed on the outer wall 2g of the jetty portion 5a.

Next, a procedure for assembling the lead block 1, which is connected to the end portion (outer end portion) of the flat cable 20, with the lower connector holder 12a of the stationary-side housing 12 will be described. In order to form the lead block 1 connected to the flat cable 20, first, the support member 2 is disposed and positioned in the receiving recess 17b (receiving portion) of the lower protruding portion 17a of the outer cylindrical portion 17. Then, the lower cover 18 is assembled with the outer cylindrical portion 17 so that the leading end portions 3a of the respective pin terminals 3 are inserted into the respective insertion holes 18d of the holding wall portion 18b of the lower protruding portion 18a (lower cover 18). The work for assembling the lead block 1 is performed when the outer cylindrical portion 17 of the stationary-side housing 12 and the lower cover 18 are integrated with each other by snap fitting. That is, the support member 2 is disposed in the receiving recess 17b while being positioned. Then, the lower cover 18 is assembled with the outer cylindrical portion 17 so that the leading end portions of the respective pin terminals 3 are inserted into the respective insertion holes 18d of the holding wall portion 18b of the lower protruding portion 18a. While the lower connector holder 12a is assembled by the lower protruding portion 17a and the lower protruding portion 18a, the lead block 1 is assembled with the lower connector holder 12a.

Since an insulating support member 2, which is molded by a simple mold, can be applied to the lead block 1 of this embodiment as described above, insert molding does not need to be performed using a mold having the complicated structure. Further, since it is possible to manufacture the lead block 1 by fitting the plurality of pin terminals 3 into the support member 2 and holding the plurality of pin terminals on the support member, it is possible to significantly reduce the manufacturing costs of the lead block and to significantly reduce the manufacturing costs of the rotary connector. Moreover, since these lead blocks 1 can use the common support member 2, the lead block 1 can also be applied to the structure that has different number of pin terminals. For this reason, since it is possible to further reduce component costs, a rotary connector 30 very advantageous for cost reduction is obtained.

Further, when the lead block 1 connected to the flat cable 20 is assembled with the lower connector holder 12a of the stationary-side housing 12 in this embodiment, the support member 2 is held in the receiving recess 17b of the lower protruding portion 17a while being positioned and the stopper portions 3e of the respective pin terminals 3 are interposed between the holding wall portion 18b of the lower protruding portion 18a and the outer wall 2g of the support member 2. For this reason, even though a large external force (a pushing force or a pulling force) is applied to the pin terminals 3 when an external connector is attached to and detached from the respective pin terminals 3 protruding outward from the insertion holes 18d of the holding wall portion 18b, there is no concern that the pin terminals 3 are separated from the support member 2 and there is also no concern that the separation of the welded portions between the joint portions 3d of the pin terminals 3 and the connecting portions 21a of the belt-like conductors 21 of the flat cable 20 causes conduction failure. Accordingly, it is possible to easily perform the work for attaching/detaching an external connector to/from the rotary connector 30 at ease.

Meanwhile, in this embodiment, for example, pin terminals of a lead block (not shown) connected to the other end portion of the flat cable 20, that is, a lead block assembled with the upper connector holder 11a of the movable-side housing 11 are formed in a substantially L shape. For this reason, even though the stopper portions of the respective pin terminals are not interposed between this lead block and at a part of the movable-side housing 11, there is no concern that the pin terminals cause positional deviation relative to the support member when an external connector is attached to and detached from the pin terminals. However, if the pin terminals of this lead block (not shown) have a straight shape, it is preferable that the stopper portions of the respective pin terminals be interposed by using a part (for example, the upper rotor 15) of the movable-side housing 11 like in the above-mentioned lead block 1.

Moreover, in this embodiment, mounting hole portions 9 into which the wedge-shaped portions 3c of the plurality of pin terminals 3 are fitted are formed at the support member 2 of the lead block 1 connected to one end portion of the flat cable 20, and fitting portions 2c as holding portions, where the base end portions 3b of the respective pin terminals 3 are press-fitted and held so that the respective pin terminals 3 are arranged parallel to each other, are formed at the support member 2 of the lead block 1. For this reason, the mounting strength and mounting-position accuracy of the pin terminals 3 on the support member 2 are improved. Meanwhile, the mounting hole portions 9 and the fitting portions 2c have been formed as holding portions in this embodiment, but the guide grooves 7 may also be applied as holding portions. Accordingly, both the fitting portions 2c and the guide grooves 7 may be used as holding portions, and holding portions may be formed of only the guide grooves 7.

Further, if the lower cover 18 (first case body) and the outer cylindrical portion 17 (second case body) are connected to each other by snap fitting while the support member 2 is positioned in this embodiment, it is possible to easily perform the work for assembling the lead block 1 with the lower cover 18 and the outer cylindrical portion 17.

Meanwhile, as described above, a lead block (not shown) connected to the other end portion of the flat cable 20 also has substantially the same basic structure as the basic structure of the above-mentioned lead block 1. Accordingly, even in this lead block (not shown), the mounting strength and mounting-position accuracy of the pin terminals on the support member are easily improved, working efficiency is good when the flat cable 20 is connected, and conduction reliability is also high after the flat cable 20 is connected.

It should be understood by those skilled in the art that various modifications, combinations, sub-combinations and alterations may occur depending on design requirements and other factors insofar as they are within the scope of the appended claims.

## Claims

1. A rotary connector (30) comprising:
a movable-side housing (11) and a stationary-side housing (12) that are connected so as to be rotatable relative to each other;
an annular space (13) that is formed between the movable-side housing (11) and the stationary-side housing;
a flat cable (20) that is received in the annular space (13) while being wound and is formed by covering a plurality of belt-like conductors (21), which are arranged parallel to each other, except for connecting portions (21a) with a pair of insulating films (22); and
a lead block (1) that is connected to the connecting portions (21a) of the flat cable (20), include a plurality of pin terminals (3) arranged parallel to each other, and is electrically connected to the outside,
wherein the flat cable (20) and the lead block (1) overlap each other so that the plurality of pin terminals (3) cross the plurality of belt-like conductors (21), and
the plurality of pin terminals (3) of the lead block (1) are fitted to an insulating support member (2) and held so that leading end portions (3a) of the plurality of pin terminals (3) protrude to the outside, and include joint portions (3d) connected to the connecting portions (21a) of the flat cable (20), **characterized in that** the connecting poritons (21a) of the flat cable (20), which are connected to the joint portions (3d) of the plurality of pin terminals (3), are exposed to a plurality of hole portions (23) that are formed at the pair of insulating films (22).

2. The rotary connector according to claim 1,
wherein the plurality of pin terminals (3) include locking portions (3e) that are locked to an outer wall (2g) of the support member (2) while being fitted to the support member (2) and held,
at least one of the movable-side housing (11) and the stationary-side housing (12) includes a receiving portion (17b) in which the lead block (1) is received, and includes a holding wall portion (18b) including insertion holes (18d) to which the leading end portions (3a) of the plurality of pin terminals (3) are inserted, and
the locking portions (3e) are interposed between the holding wall portion (18b) and the support member (2) while the lead block (1) is received.

3. The rotary connector according to claim 2,
wherein the stationary-side housing (12) is formed by snap fitting a first case body (18) to a second case body (17), the receiving portion (17b) is formed at the second case body (17), the insertion holes (18d) are formed at the first case body (18), and the first and second case bodies (18, 17) form a connector holder (12a) that holds the lead block (1).

4. The rotary connector according to any of the preceding claims,
wherein the support member (2) includes first holding portion (9) which is formed close to the leading end portions (3a) of the plurality of pin terminals (3) and where the plurality of pin terminals (3) are fitted and held, and
second holding portion (10) that is formed close to base end portions (3d) of the plurality of pin terminals (3) and hold the plurality of pin terminals (3) so that the plurality of pin terminals (3) are arranged parallel to each other.

5. The rotary connector according to claim 4,
wherein the support member (2) includes
exposure hole portions (6) that are formed so that the joint portions (3d) are disposed between the first and second holding portions (9, 10), and
guide grooves (7) that guide the plurality of pin terminals (3) so that the plurality of pin terminals (3) are inserted while the surfaces of the pin terminals (3) are exposed to the outside, when the plurality of pin terminals (3) are inserted from the first holding portion (9) toward the second holding portion (10), and
the plurality of pin terminals (3) include engaging portions (3c) that are formed so as to bite into inner surfaces of the first holding portion (9).

## Patentansprüche

1. Drehverbinder (30), der Folgendes aufweist:
ein auf einer beweglichen Seite befindliches Gehäuseelement (11) und ein auf einer stationären Seite befindliches Gehäuseelement (12), die derart miteinander verbunden sind, dass sie relativ zueinander drehbar sind;
einen ringförmigen Raum (13), der zwischen dem Gehäuseelement (11) auf der beweglichen Seite und dem Gehäuseelement auf der stationären Seite gebildet ist;
ein Flachkabel (20), das in dem ringförmigen Raum (13) in aufgewickelter Form aufgenommen ist und gebildet ist, indem eine Mehrzahl von parallel zueinander angeordneten, bandartigen Leitern (21) mit Ausnahme von Anschlussbereichen (21a) mit einem Paar von isolierenden Schichten (22) bedeckt ist; und
einen Anschlussblock (1), der mit den Anschlussbereichen (21a) des Flachkabels (20) verbunden ist, eine Mehrzahl von parallel zueinander angeordneten Stiftanschlüssen (3) aufweist und mit der Außenseite in elektrischer Verbindung steht,
wobei das Flachkabel (20) und der Anschlussblock (1) einander überlappen, so dass die Mehrzahl von Stiftanschlüssen (3) die Mehrzahl von bandartigen Leitern (21) quert, und
wobei die Mehrzahl von Stiftanschlüssen (3) des Anschlussblocks (1) an einem isolierenden Trägerelement (2) angebracht und derart gehalten ist, dass vordere Endbereiche (3a) der Mehrzahl von Stiftanschlüssen (3) nach außen vorstehen, sowie Verbindungsbereiche (3d) aufweist, die mit den Anschlussbereichen (21a) des Flachkabels (20) verbunden sind,
**dadurch gekennzeichnet, dass** die Anschlussbereiche (21a) des Flachkabels (20), die mit den Verbindungsbereichen (3d) der Mehrzahl von Stiftanschlüssen (3) verbunden sind, zu einer Mehrzahl von Öffnungsbereichen (23) freiliegen, die an dem Paar der isolierenden Schichten (22) gebildet sind.

2. Drehverbinder nach Anspruch 1,
wobei die Mehrzahl von Stiftanschlüssen (3) Verriegelungsbereiche (3e) aufweist, die mit einer Außenwand (2g) des Trägerelements (2) verriegelt sind, während sie an dem Trägerelement (2) angebracht und von diesem gehalten sind,
wobei mindestens eines von dem Gehäuseelement (11) auf der beweglichen Seite und dem Gehäuseelement (12) auf der stationären Seite einen Aufnahmebereich (17b) aufweist, in dem der Anschlussblock (1) aufgenommen ist, sowie einen Haltewandbereich (18b) mit Einsetzöffnungen (18d) aufweist, in die die vorderen Endbereiche (3a) der Mehrzahl von Stiftanschlüssen (3) eingesetzt sind, und
wobei die Verriegelungsbereiche (3e) bei aufgenommenem Anschlussblock (1) zwischen dem Haltewandbereich (18b) und dem Trägerelement (2) angeordnet sind.

3. Drehverbinder nach Anspruch 2,
wobei das Gehäuseelement (12) auf der stationären Seite durch Einschnappen eines ersten Gehäusekörpers (18) an einem zweiten Gehäusekörper (17) gebildet ist, wobei der Aufnahmebereich (17b) an dem zweiten Gehäusekörper (17) gebildet ist, wobei die Einsetzöffnungen (18d) an dem ersten Gehäusekörper (18) gebildet sind, und wobei der erste und der zweite Gehäusekörper (18, 17) einen Verbinderhalter (12a) bilden, der den Anschlussblock (1) hält.

4. Drehverbinder nach einem der vorhergehenden Ansprüche,
wobei das Trägerelement (2) einen ersten Haltebereich (9) aufweist, der nahe den vorderen Endbereichen (3a) der Mehrzahl von Stiftanschlüssen (3) gebildet ist und an dem die Mehrzahl von Stiftanschlüssen (3) angebracht und gehalten ist, sowie
einen zweiten Haltebereich (10) aufweist, der nahe von Basisendbereichen (3b) der Mehrzahl von Stiftanschlüssen (3) gebildet ist und die Mehrzahl von Stiftanschlüssen (3) derart hält, dass die Mehrzahl von Stiftanschlüssen (3) parallel zueinander angeordnet sind.

5. Drehverbinder nach Anspruch 4,
wobei das Trägerelement (2)
Freilegungs-Öffnungsbereiche (6) aufweist, die derart ausgebildet sind, dass die Verbindungsbereiche (3d) zwischen dem ersten und dem zweiten Haltebereich (9, 10) angeordnet sind, und
Führungsnuten (7) aufweist, die die Mehrzahl von Stiftanschlüssen (3) derart führen, dass die Mehrzahl von Stiftanschlüssen (3) eingesetzt ist, während die Oberflächen der Stiftanschlüsse (3) zur Außenseite freiliegen, wenn die Mehrzahl von Stiftanschlüssen (3) von dem ersten Haltebereich (9) in Richtung auf den zweiten Haltebereich (10) eingesetzt wird, und
wobei die Mehrzahl von Stiftanschlüssen (3) Eingriffsbereiche (3c) aufweist, die derart ausgebildet sind, dass sie sich in Innenflächen des ersten Haltebereichs (9) einkrallen.

## Revendications

1. Connecteur rotatif (30) comprenant :
un logement côté mobile (11) et un logement côté fixe (12) qui sont reliés de manière à pouvoir tourner l'un par rapport à l'autre ;
un espace annulaire (13) qui est formé entre le logement côté mobile (11) et le logement côté fixe ;
un câble plat (20) qui est reçu dans l'espace annulaire (13) en étant enroulé et est formé en recouvrant une pluralité de conducteurs en forme de bande (21), qui sont agencés parallèlement les uns aux autres, à l'exception de parties de connexion (21a), au moyen d'une paire de films isolants (22) ; et
un bloc de tête (1) qui est connecté aux parties de connexion (21a) du câble plat (20), comporte une pluralité de bornes de broche (3) agencées parallèlement entre elles, et est connecté électriquement vers l'extérieur,
dans lequel le câble plat (20) et le bloc de tête (1) se recouvrent mutuellement, de sorte que la pluralité de bornes de broche (3) croise la pluralité de conducteurs en forme de bande (21), et
les bornes de la pluralité de bornes à broches (3) du bloc de tête (1) sont ajustées sur un élément support isolant (2) et maintenues de sorte que les parties d'extrémité avant (3a) de la pluralité de bornes de broche (3) font saillie vers l'extérieur, et comportent des parties de jonction (3d) connectées aux parties de connexion (21a) du câble plat (20), **caractérisé en ce que** les parties de connexion (21a) du câble plat (20), qui sont connectées aux parties de jonction (3d) de la pluralité de bornes à broches (3), sont exposées à une pluralité de parties de trou (23) qui sont formées au niveau de la paire de films isolants (22).

2. Connecteur rotatif selon la revendication 1,
dans lequel les bornes de la pluralité de bornes à broches (3) comportent des parties de verrouillage (3e) qui sont verrouillées sur une paroi externe (2g) de l'élément support (2) tout en étant ajustées sur l'élément support (2) et maintenues,
au moins un du logement côté mobile (11) et du logement côté fixe (12) comporte une partie de réception (17b) dans laquelle est reçu le bloc de tête (1), et comporte une partie de paroi de maintien (18b) incluant des trous d'insertion (18d) dans lesquels sont insérées les parties d'extrémité avant (3a) de la pluralité de bornes à broches (3), et
les parties de verrouillage (3e) sont intercalées entre la partie de paroi de maintien (18b) et l'élément support (2), tandis que le bloc de tête (1) est reçu.

3. Connecteur rotatif selon la revendication 2,
dans lequel le logement côté fixe (12) est formé par ajustement par encliquetage d'un premier corps de boîtier (17) sur un second corps de boîtier (11), la partie de réception (17b) est formée au niveau du second corps de boîtier (17), les trous d'insertion (18d) sont formés dans le premier corps de boîtier (18) et les premier et second corps de boîtier (18, 17) forment un support de connecteur (12a) qui maintient le bloc de tête (1).

4. Connecteur rotatif selon l'une quelconque des revendications précédentes,
dans lequel l'élément support (2) comporte une première partie de maintien (9) qui est formée près des parties d'extrémité avant (3a) de la pluralité de bornes à broches (3) et où sont ajustées et maintenues les bornes de la pluralité de bornes à broches (3), et
une seconde partie de maintien (10) est formée près des parties d'extrémité de base (3d) de la pluralité de bornes à broches (3) et maintient la pluralité de bornes à broches (3) de sorte que les bornes de la pluralité de bornes à broches (3) sont agencées parallèlement entre elles.

5. Connecteur rotatif selon la revendication 4,
dans lequel l'élément support (2) comporte
des parties de trou d'exposition (6) qui sont formées de sorte que les parties de jonction (3d) sont disposées entre les première et seconde parties de maintien (9, 10), et
des rainures de guidage (7) qui guident la pluralité de bornes à broches (3) de sorte que les bornes de la pluralité de bornes à broches (3) sont insérées tandis que les surfaces des bornes à broches (3) sont exposées à l'extérieur, lorsque les bornes de la pluralité de bornes à broches (3) sont insérées de la première partie de maintien (9) vers la seconde partie de maintien (10), et
les bornes de la pluralité de bornes à broches (3) comportent des parties de mise en prise (3c) qui sont formées de façon à mordre dans les surfaces internes de la première partie de maintien (9).
